# EUROPEAN PATENT SPECIFICATION

(11) **EP 2 748 117 B1**
(45) Date of publication and mention of the grant of the patent: **27.03.2019**
(21) Application number: 12733491.0
(22) Date of filing: 09.07.2012
(51) Int. Cl.: C03C 17/30, C03C 17/32

(54) **A WINDOW PANE WITH A HYDROPHILIC COATING**
EINE FENSTERSCHEIBE MIT HYDROPHILER BESCHICHTUNG
PANNEAU DE FENÊTRE AVEC REVÊTEMENT HYDROPHILE

(30) Priority: 23.08.2011 EP 11178449
(43) Date of publication of application: 02.07.2014
(73) Proprietor: Saint-Gobain Glass France, 92400 Courbevoie (FR)
(72) Inventor: ALLANO, Jean-luc, F-95170 Deuil La Barre (FR); ARNAUD, Alix, F-92120 Montrouge (FR); CHUDA, Katarzyna, F-94800 Villejuif (FR); FOTI, Fabio, F-75002 Paris (FR); OMONT, Matthieu, 52078 Aachen (DE); JAMET, Stéphan, F-60200 Compiegne (FR); QUEVAL, Willy, F-60157 Elincourt Sainte Marguerite (FR)
(74) Representative: Gebauer, Dieter Edmund
(86) International application number: PCT/EP2012/063379
(87) International publication number: WO 2013/026612

(56) References cited:
- JP-A- 6 306 327
- US-A- 4 136 250
- US-A- 4 467 073
- US-A1- 2004 137 155

## Description

The invention relates to a window pane with a hydrophilic coating, a method for its production, and its use.

The visibility through window panes in vehicles may be impaired when condensation occurs on the glazing. Common solutions to avoid or to eliminate fogging are either the increase of the ventilation or the use of heatable window panes. In order to conserve the battery charge of electric vehicles, a passive solution is preferable.

US 2004/0137155 A1 discloses a method of creating a coating on a substrate that counteracts the condensation of water on the substrate. The coating is made of polyurethane. The effectiveness of the coating is limited by the water absorption capability of polyurethane. After saturation of the coating, drops of water that impair visibility through the substrate can form on the surface.

WO 2009/101296 A1 likewise discloses a method of creating a polyurethane coating on a substrate. To prevent the formation of water droplets after saturation of the polyurethane, the coating includes a surfactant. The surfactant causes formation of a film of water on the surface of the coating. At low environmental temperatures, this film of water can freeze and impair visibility through the substrate.

The Japanese patent application JP 6306327 A discloses a hydrophilic coating comprising polyurethane, polyvinylpyrrolidone and polymethylsiloxane.

The object of the present invention is to provide a window pane with a hydrophilic coating, wherein the water absorption capability is increased compared to a pure polyurethane and the freezing of water on the surface of the coating is prevented. The object of the present invention is further to provide a method of producing the window pane with a hydrophilic coating.

The object of the present invention is accomplished according to the invention by a window pane with a hydrophilic coating according to the independent claim 1. Preferred embodiments emerge from the subclaims.

The window pane with a hydrophilic coating according to the invention comprises at least the following characteristics:
- a substrate and
- a hydrophilic layer containing at least polyurethane, polyvinylpyrrolidone, and a flow agent.

Polyurethanes are synthetic materials that emerge from the polyaddition reaction of polyols with isocyanate compounds that have at least two isocyanate groups. The properties of the polyurethanes can be predetermined by the selection of the isocyanate compound and the polyol component.

In a preferred embodiment of the invention, the polyurethane is obtained from at least one aliphatic diisocyanate, particularly preferably from hexamethylene-1,6-diisocyanate, an oligomer of hexamethylene-1,6-diisocyanate, or a homopolymer of hexamethylene-1,6-diisocyanate. The advantage lies in the good resistance to UV radiation and the stability of the polyurethane layer.

The polyurethane according to the invention is further preferably obtained at least with one polyalkylene glycol, particularly preferably polyethylene glycol. The average molecular weight of the polyethylene glycol is preferably from 180 g/mol to 630 g/mol, particularly preferably from 190 g/mol to 320 g/mol. This is particularly advantageous with regard to the capability of the coating to absorb moisture, the stability and flexibility of the coating, and the solubility of polyethylene glycol.

Alternatively, the polyurethane is preferably obtained at least with a polyether polyol, particulary preferably polypropylene ether polyol, very particularly preferably trifunctional polypropylene ether polyol. The average molecular weight of the polypropylene ether polyol is preferably from 200 g/mol to 600 g/mol, particularly preferably from 350 g/mol to 500 g/mol. The polyurethane is particularly preferably obtained at least with a mixture of polypropylene ether polyol and polyethylene glycol, for example with a weight ratio of polypropylene ether polyol to polyethylene glycol of 2:1 to 1:2.

In another preferred embodiment, the polyurethane is obtained at least with 1,4-Butanediol or with polyethylene glycol and 1,4-Butanediol. The weight ratio of polyethylene glycol to 1,4-Butanediol preferably is from 1:2 to 2:1.

The polyurethane in a preferred embodiment is obtained at least with polyethylene glycol, polypropylene ether polyol and / or 1,4-Butanediol.

The polyurethane according to the invention has a porous structure. Thus, the polyurethane matrix can absorb moisture, in particular with the use of a hydrophilic polyol component, such as polyethylene glycol. The moisture is drawn from the surrounding atmosphere. Thus, formation of water condensation at low temperatures is advantageously avoided.

Polyvinylpyrrolidone is a hygroscopic polymer that can absorb up to 40% of its own mass in water. The polyvinylpyrrolidone is preferably embedded in the polyurethane matrix. The polyvinylpyrrolidone can be covalently or adsorptively bonded to the polyurethane.

The advantage of the invention results from the hygroscopic polyvinylpyrrolidone in the polyurethane matrix. Thus, the coating can absorb a large quantity of moisture compared to a pure polyurethane. Moreover, the moisture is absorbed more rapidly. The condensing of water drops on the window pane at low temperatures and freezing of moisture on the window pane can, consequently, be prevented for a longer period of time than by a layer without polyvinylpyrrolidone .

The polyvinylpyrrolidone has, preferably, a weight average molecular weight of M_{W} = 0.8 x 10⁶ g/mol - 2.2 x 10⁶ g/mol, particularly preferably of M_{W} = 1.1 x 10⁶ g/mol -1.8 x 10⁶ g/mol and a number average molecular weight of preferably Mₙ = 200 x 10³ g/mol - 400 x 10³ g/mol, particularly preferably of Mₙ = 250 x 10³ g/mol - 375 x 10³ g/mol.

The hydrophilic coating can contain, in addition to the polyvinylpyrrolidone, one or a plurality of other hygroscopic polymers, for example, polyvinylpyridine, polyacrylate, polyacrylamide, polyvinyl acetate, polyacrylonitrile, polyvinyl alcohol, or polyacrolein. Copolymers of polyvinylpyrrolidone and other polymers can also be used. A cross-linked modification of polyvinylpyrrolidone can also be used.

The flow agent leads to a homogeneous distribution of the hydrophilic coating on the substrate. The flow agent causes a reduction in the surface tension of the solution out of which the hydrophilic coating is applied on the substrate, and leads, consequently, to better wetting of the substrate. Furthermore, in the formation of the hydrophilic layer through drying of the solution, the development of spatially limited convection zones (Benard effect) is prevented. This is particularly advantageous with regard to the development of a smooth surface of the hydrophilic coating. The flow agent is preferably embedded in the polyurethane matrix.

The flow agent preferably contains at least a poly(organo)siloxane. Suitable flow agents, for example, are BYK®-306 and BYK®-315. The flow agent contains, particular preferably, at least a polydimethylsiloxane. The polydimethylsiloxane can be polyester modified or polyether modified. The flow agent contains, quite particular preferably, at least a polyester-modified, hydroxy-functional polydimethylsiloxane. This is particularly advantageous with regard to increasing the surface smoothness of the hydrophilic coating. Furthermore, the solvent resistance and the scratch resistance of the hydrophilic coating are increased and the susceptibility to dirt is decreased. Because of functionalization through hydroxyl groups, the polydimethylsiloxane can be covalently bonded to the polyurethane. A suitable polyester-modified, hydroxy-functional polydimethylsiloxane, for example, is BYK®-370.

In an alternative preferred embodiment, the flow agent contains at least a polyacrylate. Thereby, particularly good results are obtained, too. Suitable flow agents, for example, are BYK®-356, BYK®-361 N, and BYK®-381.

Alternatively, the flow agent can contain at least silicon dioxide, preferably silicon dioxide nanoparticles. A suitable flow agent, for example, is NANOBYK®-3650.

The hydrophilic layer preferably contains at least 75 wt.-% to 99 wt.-% of polyurethane, 1 wt.-% to 15 wt.-% of polyvinylpyrrolidone, and 0.01 wt.-% to 3 wt.-% of the flow agent.

The hydrophilic layer contains, particularly preferably, at least 80 wt.-% to 95 wt.-% of polyurethane, 5 wt.-% to 12 wt.-% of polyvinylpyrrolidone, and 0.05 wt.-% to 0.5 wt.-% of the flow agent. This is particularly advantageous with regard to stability and flexibility of the coating and its capability to absorb moisture.

According to the invention, the hydrophilic layer contains at least 85 wt.-% to 92 wt.-% of polyurethane, 8 wt.-% to 11 wt.-% of polyvinylpyrrolidone, and 0.08 wt.-% to 0.2 wt.-% of the flow agent. Thereby, particularly good results can be achieved with regard to stability and flexibility of the coating and its capability to absorb moisture.

The hydrophilic layer has a layer thickness of 0.1 µm to 250 µm, preferably of 1 µm to 100 µm, particularly preferably of 3 µm to 50 µm, and, quite particularly preferably, of 5 µm to 40 µm, especially of 30 µm to 40 µm. This is particularly advantageous with regard to the development of a homogeneous coating and the capability of the coating to absorb moisture. The substrate comprises, preferably, glass, particularly preferably, sheet glass, float glass, quartz glass, borosilicate glass, soda lime glass. In an alternative preferred embodiment, the substrate comprises polymers, particularly preferably polyethylene, polypropylene, polycarbonate, polymethyl methacrylate, and / or mixtures thereof.

In an advantageous embodiment of the invention, the hydrophilic layer is bonded to the substrate via an adhesion promoter. The adhesion promoter contains, preferably, at least one silane. In the silane, the silicon atom is substituted by at least one alkyl chain. The alkyl chain contains at least one functional group, for example, a hydroxyl group, a carboxyl group, or an amino group. The functional group leads to bonding of the silane with the polyurethane matrix. The silicon atom can further be substituted by one or a plurality of hydroxyl groups, alkoxy groups, or halogenides, which lead to bonding of the silane to the surface of the substrate. The bonding of the silane to the polyurethane and the bonding of the silane to the substrate can be covalent or electrostatic, for example, via hydrogen bridge bonds. The particular advantage of the adhesion promoter resides in a permanently stable bonding of the hydrophilic coating to the substrate. The adhesion promoter contains, particularly preferably, an amino functional silane, for example, (3-aminopropyl)silantriol. The (3-aminopropyl)silantriol is covalently bonded via the hydroxyl groups to the surface of the substrate. The amino groups of the (3-aminopropyl)silantriol can react with free isocyanate groups of the polyurethane, producing a covalent bond of the silane to the polyurethane matrix. This is particularly advantageous with regard to the stability of the bond between the hydrophilic layer and substrate via the adhesion promoter.

The adhesion promoter can also comprise organophosphonates, organophosphonic acids, organotitanates, organozirconates and / or organozircoaluminates.

The object of the invention is further accomplished through a method of producing a window pane with a hydrophilic coating according to claim 7.

The isocyanate compound has at least two isocyanate groups. The isocyanate groups can be free or blocked by chemical protective groups.

The isocyanate compound can be aliphatic, cycloaliphatic, aromatic, or heterocyclic. In a preferred embodiment of the invention, the isocyanate compound comprises an aliphatic diisocyanate, particularly preferably hexamethylene-1,6-diisocyanate. The advantage resides in the good resistance to UV radiation and the stability of the polyurethane layer formed by the isocyanate compound and the polyol in the method according to the invention.

The isocyanate compound can be used in its monomeric form. Alternatively, oligomers or homopolymers based on the isocyanate monomer can be used. Even copolymers of different isocyanate compounds or of an isocyanate compound and, for example, a polyol can be used.

The isocyanate compound can also have three or more isocyanate groups.

The polyol has at least two hydroxyl groups. The polyol can be linear, branched, or cyclic. The polyol can, for example, comprise a polyether polyol, a polyester polyol, a hydroxylated polyacrylate, or a hydroxylated polycarbonate. Copolymers or combinations of different polyols can also be used.

In a preferred embodiment of the invention, the polyol comprises at least a polyalkylene glycol, for example, polypropylene glycol, particularly preferably polyethylene glycol. Polyethylene glycol is hygroscopic. This is particularly advantageous with regard to the capability of the coating to absorb moisture. The average molecular weight of the polyethylene glycol is preferably from 180 g/mol to 630 g/mol, particularly preferably from 190 g/mol to 320 g/mol. This is particularly advantageous with regard to the capability of the coating to absorb moisture, the stability and flexibility of the coating, and the solubility of the polyethylene glycol.

In another preferred embodiment of the invention, the polyol comprises at least a polyalkylene ether polyol, preferably polypropylene ether polyol, particularly preferably trifunctional polypropylene ether polyol. This is particularly advantageous with regard to the scratch resistance of the hydrophilic coating. Moreover, an undesired adhesion tendency to counterparts like sealing lips can be reduced. The average molecular weight of the polypropylene ether polyol is preferably from 200 g/mol to 600 g/mol, particularly preferably from 350 g/mol to 500 g/mol. This is particularly advantageous with regard to the absorbtion of moisture, the stability of the coating, and the solubility of the polyol. In a particularly preferred embodiment, the polyol comprises at least a mixture of polypropylene ether polyol and polyethylene glycol, for example with a weight ratio of polypropylene ether polyol to polyethylene glycol of 2:1 to 1:2. Thereby, the sensitivity of the hydrophilic layer to abrasion can be reduced.

In another preferred embodiment of the invention, the polyol comprises at least 1,4-Butanediol. In a particularly preferred embodiment of the invention, the polyol comprises at least polyalkylene glycol (preferably polyethylene glycol) and 1,4-Butanediol. The weight ratio of polyalkylene glycol to 1,4-Butanediol preferably is from 1:2 to 2:1. Thereby, particularly good results with regard to the resistivity to scratches and a reduced adhesiveness can be achieved.

The polyol can also comprise at least 1,4-Butanediol and polypropylene ether polyol or at least 1,4-Butanediol, polyethylene glycol and polypropylene ether polyol. The polyol in a preferred embodiment contains at least polyethylene glycol, polypropylene ether polyol and / or 1,4-Butanediol.

The flow agent preferably contains at least a polydimethylsiloxane, particular preferably a polyester-modified hydroxy-functional polydimethylsiloxane. Alternatively, the flow agent preferably contains at least a polyacrylate and / or silicon dioxide nanoparticles.

The polyvinylpyrrolidone has, preferably, a weight average molecular weight of M_{W} = 0.8 x 10⁶ g/mol - 2.2 x 10⁶ g/mol, particularly preferably of M_{W} = 1.1 x 10⁶ g/mol - 1.8 x 10⁶ g/mol and a number average molecular weight of preferably Mₙ = 200 x 10³ g/mol - 400 x 10³ g/mol, particularly preferably of Mₙ = 250 x 10³ g/mol - 375 x 10³ g/mol. This is particularly advantageous with regard to the viscosity of the solution, which is thus easy to apply to the substrate.

The solution may contain at least 12 wt.-% to 28 wt.-% of the isocyanate compound, 7 wt.-% to 20 wt.-% of polyol, 0.1 wt.-% to 10 wt.-% of polyvinylpyrrolidone, and 0.001 wt.-% to 2 wt.-% of the flow agent.

In particular, the solution may contain at least 15 wt.-% to 25 wt.-% of the isocyanate compound, 8 wt.-% to 14 wt.-% of polyol, 0.2 wt.-% to 7 wt.-% of polyvinylpyrrolidone, and 0.001 wt.-% to 1.5 wt.-% of the flow agent.

The solution contains, very particularly preferably, at least 19 wt.-% to 23 wt.-% of the isocyanate compound, 10 wt.-% to 13 wt.-% of polyol, 1 wt.-% to 5 wt.-% of polyvinylpyrrolidone, and 0.01 wt.-% to 0.2 wt.-% of the flow agent. This is particularly advantageous with regard to the stability and flexibility of the coating and its capability to absorb moisture.

According to the invention, the solution contains at least 19 wt.-% to 23 wt.-% of the isocyanate compound, 10 wt.-% to 13 wt.-% of polyol, 3 wt.-% to 5 wt.-% of polyvinylpyrrolidone, and 0.02 wt.-% to 0.05 wt.-% of the flow agent. Thereby, very good results can be achieved.

Alcohols, for example, tert-butanol or diacetone alcohol, are preferably used as the solvent. Ketones or non-polar solvents, such as xylene, can also be used.

The solution can be applied, for example, by spraying on or brushing on. Alternatively, the substrate can be dipped into the solution.

After the application of the solution, the window pane is dried to remove the solvent. The drying of the window pane takes place, preferably, at a temperature of 30 °C to 70 °C, particularly preferably, of 45 °C to 55 °C. This is particularly advantageous with regard to the formation of a homogeneous coating with a smooth surface.

In the method according to the invention, the temperature of the window pane is raised after drying, preferably for a period of 20 min to 60 min, particularly preferably of 30 min to 50 min, to 100 °C to 150 °C. Thereby, the isocyanate compound and the polyol react to form a polyurethane. The temperature is preferably raised to 115 °C to 130 °C. This is particularly advantageous with regard to a high reaction speed and the prevention of thermal damage to the components of the coating.

In an advantageous embodiment of the invention, the solution contains a catalyst. The solution contains preferably from 0.001 wt.-% to 0.1 wt.-% of the catalyst. The catalyst increases the reaction speed of the polyol and the isocyanate compound. Preferably, metalorganic compounds of bismuth or tin, such as tin carboxylate or bismuth carboxylate, particularly preferably, dibutyltin laurate, are used as catalysts. This is particularly advantageous with regard to increasing the reaction speed and the mechanical stability of the polyurethane matrix. Amines, for example, triethylenediamine, or azines, for example, 1,4-diaza(2,2,2)bicyclooctane, can also be used as catalysts.

In an advantageous embodiment of the invention, an adhesion promoter is applied to the substrate before the application of the solution. The adhesion promoter contains, preferably, a silane, particularly preferably, an amino functional silane, for example, (3-aminopropyl)silantriol. The adhesion promoter is preferably applied in a solvent, for example, by spraying on, brushing on, or dipping the substrate into the solution. Thereafter, the substrate is, preferably, dried.

The hydrophilic coating is preferably used on window panes in vehicles, in particular in electric motor vehicles and other motor vehicles on front, rear, side, or roof window panes to prevent condensation of humidity on the window pane. The hydrophilic coating is moreover used on windows in trains, aircrafts, or watercrafts, in buildings, in mirrors, in functional and / or decorative individual pieces or on glass panes as built-in parts in furniture and devices.

The invention is explained in detail with reference to drawings and an exemplary embodiment. They depict:
- Fig. 1: a cross-section through a window pane with a hydrophilic coating according to the invention, and
- Fig. 2: a detailed flowchart of the method according to the invention.

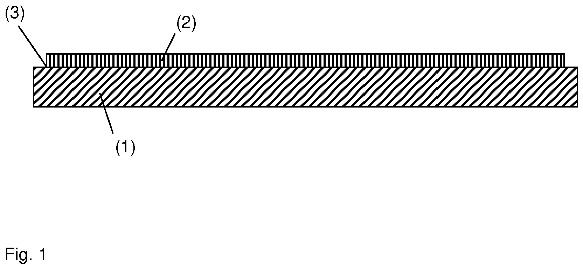

Fig. 1 depicts a cross-section through a window pane 1 with a hydrophilic coating 2 according to the invention. The window pane 1 is a 3 mm thick thermally prestressed single-pane safety glass made of soda lime glass. The window pane 1 has a width of 90 cm and a height of 60 cm. The hydrophilic coating 2 contains 89.72 wt.-% of polyurethane. The polyurethane is the polyaddition product of the polyol polyethylene glycol (Merck PEG-200) and a homopolymer of hexamethylene-1,6-diisocyanate (Bayer Desmodur N 3200). The hydrophilic layer 2 further contains 10.15 wt.-% of polyvinylpyrrolidone (BASF Luvitec K90), 0.1 wt.-% of polyester-modified, hydroxy-functional polydimethylsiloxane (BYK-370) as a flow agent, and 0.03 wt.-% of dibutyltin dilaurate as a catalyst. The hydrophilic layer 2 has a thickness of 35 µm.

The hydrophilic layer 2 is bonded to the window pane 1 via an adhesion promoter 3. The adhesion promoter is (3-aminopropyl)silantriol (Evonik Dynasylan 1151).

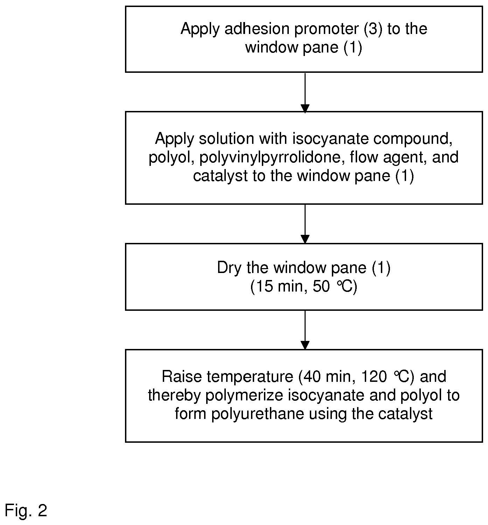

Fig. 2 depicts, by way of example, the method according to the invention for producing a window pane 1 with a hydrophilic coating 2. As a first step, the adhesion promoter 3 is applied on the substrate 1. The adhesion promoter 3 is a (3-aminopropyl)silantriol (Dynasylan 1151). Then, for the coating of the substrate 1, a solution is applied. The solution contains 20.44 wt.-% of a homopolymer hexamethylene-1,6-diisocyanate (Bayer Desmodur N 3200), 11.19 wt.-% of polyethylene glycol (Merck PEG-200), 0.01 wt.-% of dibutyltin dilaurate as a catalyst, and 64.65 wt.-% of diacetone alcohol as a solvent. The solution further contains 0.14 wt.-% of a 25-% solution of a polyester-modified, hydroxy-functional polydimethylsiloxane as a flow agent in a mixture of organic solvent (BYK-370). The window pane is dried for 15 minutes at a temperature of 50 °C. Then, the window pane is heated to 120 °C for 40 min. Thereby, the isocyanate compound reacts, mediated by the catalyst, with the polyol to form a polyurethane.

### Example 1

Test specimens were produced with the window pane 1 and the hydrophilic layer 2. The window pane was a side window of an automobile (thickness 3 mm, width 90 cm, height 60 cm). The hydrophilic layer 2 was applied according to the method according to the invention on the side of the window pane 1 facing the vehicle interior. First, (3-aminopropyl)silantriol in aqueous solution (Evonik Dynasylan 1151) was sprayed on as an adhesion promoter 3 and the window pane 1 dried in a stream of air. Then, 50.4 mL of a solution with the isocyanate compound, the polyol, the polyvinylpyrrolidone, the flow agent, the catalyst, and the solvent was sprayed on. The substances and quantities used, based on 1000 g solvent, are reported in Table 1.

After the application of the solution, the window panes were dried for 15 min at 50 °C. Thereafter, the window panes were heated for 40 min to 120 °C. This caused the polyol to react, mediated by the catalyst, with the isocyanate compound. A hydrophilic layer 2 consisting of a polyurethane matrix with embedded polyvinylpyrrolidone and flow agent was obtained. The layer thickness of the hydrophilic layer was 35 µm. The surface of the hydrophilic layer was smooth.

The humidity in the interior of the automobile was set using an evaporator. Humidity that simulated the presence of five people in the motor vehicle interior was set. The temperature was -3 °C.

The beginning of the formation of water condensation was observed after 4 min. After 15 minutes, the window pane was completely covered with water condensation. The observations are reported in Table 2.

In addition, the scratch resistance of the hydrophilic layer 2 was measured with a standardised Erichsen test. A metal needle (tip diameter 0.75 mm) was moved over the hydrophilic layer 2, whereby an increasing pressure was exerted. The pressure needed to produce a visible scratch in the hydrophilic layer 2 was measured. The test was performed before and after the absorption of moisture. The observations are reported in Table 5.

### Example 2

The Example 2 was conducted exactly the same as the Example 1. The difference resided in the use of a different polyol compound. The substances and quantities used, based on 1000 g solvent, are reported in Table 3. The observations concerning the formation of water condensation are reported in Table 2. The observations concerning the scratch resistance are reported in Table 5.

An increased scratch resistance could be observed compared to example 1, especially after the absorption of moisture. Moreover, it was observed that the adhesiveness of the hydrophilic layer 2 after the absorption of moisture was significantly reduced compared to example 1.

### Example 3

The Example 2 was conducted exactly the same as the Example 1. The difference resided in the use of a different polyol compound. The substances and quantities used, based on 1000 g solvent, are reported in Table 4. The observations concerning the formation of water condensation are reported in Table 2. The observations concerning the scratch resistance are reported in Table 5.

An increased scratch resistance in the dry state could be observed compared to example 1. Moreover, it was observed that the adhesiveness of the hydrophilic layer 2 after the absorption of moisture was significantly reduced compared to example 1.

### Comparative Example 1

The Comparative Example 1 was conducted exactly the same as the Example 1. The difference resided in the composition of the hydrophilic layer 2. The hydrophilic layer 2 contained no polyvinylpyrrolidone. As a result, the capability of absorbing moisture of the hydrophilic layer 2 was less in comparison to the Examples 1-3 according to the invention. The substances and quantities used, based on 1000 g solvent, are reported in Table 1.

The formation of water condensation was observed earlier in comparison to the Examples according to the invention. The observations are reported in Table 2.

### Comparative Example 2

The Comparative Example 2 was conducted exactly the same as the Example 1. The difference resided in the composition of the hydrophilic layer 2. The hydrophilic layer 2 contained no flow agent. Thus, the surface tension of the solution was not reduced at the time of the coating. Spatially limited convection zones (Bénard effect) were able to form during the drying of the solution. The substances and quantities used, based on 1000 g solvent, are reported in Table 1.

The hydrophilic layer had a structured (eroded) surface. The observations are reported in Table 2.

### Comparative Example 3

In the Comparative Example 3, a window pane 1 without a hydrophilic layer 2 was investigated. The observations are reported in Table 2.

**Table 1**

| Component | Material | Example 1 | Comparative Example 1 | Comparative Example 2 |
|---|---|---|---|---|
| | | | | |
| Solvent | Diacetone alcohol | 1000 g | 1000 g | 1000 g |
| Isocyanate | Homopolymer of hexamethylene-1,6-diisocyanate (Desmodur N 3200, Bayer) | 316.17 g | 316.17 g | 316.17 g |
| Polyol | Polyethylene glycol (PEG-200, Merck) | 173.01 g | 173.01 g | 173.01 g |
| Catalyst | Dibutyltin dilaurate | 0.14 g | 0.14 g | 0.14 g |
| Polyvinylpyrrolidone | Luvitec K90 (BASF) | 55.36 g | - | 55.36 g |
| Flow agent | Polyester-modified, hydroxy-functional polydimethylsiloxane in solvent mixture (25-% solution) (BYK-370) | 2.13 g | 2.13 g | - |

**Table 2**

| | Beginning of condensation | Pane completely covered by water condensation | Surface state of the hydrophilic layer 2 |
|---|---|---|---|
| Example 1 | 4 min | 15 min | Smooth |
| Example 2 | 4 min | 15 min | Smooth |
| Example 3 | 4 min | 15 min | Smooth |
| Comparative Example 1 | 2 min | 7 min | Smooth |
| Comparative Example 2 | 4 min | 15 min | Structured / eroded |
| Comparative Example 3 | Immediately | 4 min | No hydrophilic coating 2 |

**Table 3**

| Component | Material | Example 2 |
|---|---|---|
| | | |
| Solvent | Diacetone alcohol | 1000 g |
| Isocyanate | Homopolymer of hexa-methylene-1,6-diisocyanate (Desmodur N 3200, Bayer) | 316.17g |
| Polyol | trifunctional polypropylene ether polyol (Desmophen 1380 BT, Bayer) | 195.39 g |
| Catalyst | Dibutyltin dilaurate | 0.14 g |
| Polyvinylpyrrolidone | Luvitec K90 (BASF) | 55.36 g |
| Flow agent | Polyester-modified, hydroxy-functional polydimethylsiloxane in solvent mixture (25-% solution) (BYK-370) | 2.13 g |

**Table 4**

| Component | Material | Example 2 |
|---|---|---|
| | | |
| Solvent | Diacetone alcohol | 1000 g |
| Isocyanate | Homopolymer of hexa-methylene-1,6-diisocyanate (Desmodur N 3200, Bayer) | 316.17 g |
| Polyol | Polyethylene glycol (PEG-200, Merck) | 102.3 g |
| | 1,4-Butanediol | 102.3 g |
| Catalyst | Dibutyltin dilaurate | 0.14 g |
| Polyvinylpyrrolidone | Luvitec K90 (BASF) | 55.36 g |
| Flow agent | Polyester-modified, hydroxy-functional polydimethylsiloxane in solvent mixture (25-% solution) (BYK-370) | 2.13 g |

**Table 5**

| | scratch resistance | |
|---|---|---|
| | dry | humid |
| Example 1 | 7 N | 3 N |
| Example 2 | 8 N | 6 N |
| Example 3 | 9 N | 3 N |

It was demonstrated that window panes according to the invention have later formation of water condensation than the known window panes with coating without polyvinylpyrrolidone and better surface smoothness than window panes with coating without a flow agent. In addition, it has been shown that the scratch resistance as well as the adhesiveness of the hydrophilic layer 2 can be controlled by the choice of the polyol compound.

This result was unexpected and surprising for the person skilled in the art.

## Claims

1. A window pane with a hydrophilic coating, comprising at least:
- a substrate (1) and
- a hydrophilic layer (2) containing at least 85 wt.-% to 92 wt.-% of polyurethane, 8 wt.-% to 11 wt.-% of polyvinylpyrrolidone, and 0.08 wt.-% to 0.2 wt.-% of a flow agent.

2. The window pane according to claim 1, wherein the flow agent contains at least a polydimethylsiloxane, preferably a polyester-modified polydimethylsiloxane, particular preferably a polyester-modified, hydroxy-functional polydimethylsiloxane.

3. The window pane according to claim 1 or 2, wherein the polyvinylpyrrolidone and the flow agent are embedded in the polyurethane.

4. The window pane according to one of the claims 1 to 3, wherein the weight average molecular weight of the polyvinylpyrrolidone is from 1.1 x 10⁶ g/mol to 1.8 x 10⁶ g/mol.

5. The window pane according to one of the claims 1 to 4, wherein the hydrophilic layer (2) has a layer thickness of 0.1 µm to 250 µm, preferably of 1 µm to 100 µm, particularly preferably of 3 µm to 50 µm.

6. The window pane according to one of the claims 1 to 5, wherein the hydrophilic layer (2) is bonded to the substrate (1) via an adhesion promoter (3) and the adhesion promoter (3) preferably contains at least one amino-functional silane.

7. Method of producing a window pane with a hydrophilic coating (2), wherein
(a) a solution containing at least 19 wt.-% to 23 wt.-% of an isocyanate compound and 10 wt.-% to 13 wt.-% of a polyol, 3 wt.-% to 5 wt.-% of polyvinylpyrrolidone, 0.02 wt.-% to 0.05 wt.-% of a flow agent, and a solvent is applied to a substrate (1),
(b) the window pane containing the substrate (1) and the applied solution is dried, and
(c) the temperature is raised to 100 °C to 150 °C.

8. Method according to claim 7, wherein before process step (a), an adhesion promoter (3) is applied to the substrate (1).

9. Method according to claim 7 or 8, wherein the isocyanate compound contains at least hexamethylene-1,6-diisocyanate, an oligomer of hexamethylene-1,6-diisocyanate, or a homopolymer of hexamethylene-1,6-diisocyanate.

10. Method according to one of the claims 7 to 9, wherein the polyol contains at least polyethylene glycol, polypropylene ether polyol and / or 1,4-Butanediol.

11. Method according to one of the claims 7 to 10, wherein the solution contains a catalyst, preferably dibutyltin dilaurate.

12. Method according to one of the claims 7 to 11, wherein the window pane is dried at a temperature of 30 °C to 70 °C, preferably of 45 °C to 55 °C.

13. Method according to one of the claims 7 to 12, wherein in process step (c) the temperature is raised to 115 °C to 130 °C.

14. Use of a window pane with a hydrophilic coating according to one of claims 1-6 in means of transportation for land, air, and water traffic, in particular in electric vehicles and other motor vehicles, for example, as windshields, rear windows, side windows, and / or roof windows, as window panes in buildings, in mirrors in functional and / or decorative individual pieces and as glass panes as built-in parts in furniture and devices to reduce the condensation of humidity on the pane.

## Patentansprüche

1. Eine Fensterscheibe mit einer hydrophilen Beschichtung, mindestens umfassend:
- ein Substrat (1) und
- eine hydrophile Schicht (2), die mindestens 85 Gew.-% bis 92 Gew.-% Polyurethan, 8 Gew.-% bis 11 Gew.-% Polyvinylpyrrolidon, und 0,08 Gew.-% bis 0,2 Gew.-% eines Fließmittels enthält.

2. Die Fensterscheibe nach Anspruch 1, wobei das Fließmittel mindestens ein Polydimethylsiloxan, bevorzugt ein Polyester-modifiziertes Polydimethylsiloxan, besonders bevorzugt ein Polyester-modifiziertes, hydroxy-funktionelles Polydimethylsiloxan enthält.

3. Die Fensterscheibe nach Anspruch 1 oder 2, wobei das Polyvinylpyrrolidon und das Fließmittel in das Polyurethan eingebettet sind.

4. Die Fensterscheibe nach einem der Ansprüche 1 bis 3, wobei das mittlere Molekulargewicht des Polyvinylpyrrolidons von 1,1 x 10⁶ g/mol bis 1,8 x 10⁶ g/mol beträgt.

5. Die Fensterscheibe nach einem der Ansprüche 1 bis 4, wobei die hydrophile Schicht (2) eine Schichtdicke von 0,1 µm bis 250 µm, bevorzugt von 1 µm bis 100 µm, besonders bevorzugt von 3 µm bis 50 µm, aufweist.

6. Die Fensterscheibe nach einem der Ansprüche 1 bis 5, wobei die hydrophile Schicht (2) über einen Haftvermittler (3) mit dem Substrat (1) verbunden ist und der Haftvermittler (3) bevorzugt mindestens ein Amino-funktionelles Silan enthält.

7. Verfahren zum Herstellen einer Fensterscheibe mit einer hydrophilen Beschichtung (2), wobei
(a) eine Lösung, enthaltend mindestens 19 Gew.-% bis 23 Gew.-% einer Isocyanatverbindung und 10 Gew.-% bis 13 Gew.-% eines Polyols, 3 Gew.-% bis 5 Gew.-% Polyvinylpyrrolidon, 0,02 Gew.-% bis 0,05 Gew.-% eines Fließmittels und ein Lösungsmittel, auf ein Substrat (1) aufgebracht wird,
(b) die Fensterscheibe, enthaltend das Substrat (1) und die aufgebrachte Lösung, getrocknet wird, und
(c) die Temperatur auf 100°C bis 150°C erhöht wird.

8. Verfahren nach Anspruch 7, wobei vor Verfahrensschritt (a) ein Haftvermittler (3) auf das Substrat (1) aufgebracht wird.

9. Verfahren nach Anspruch 7 oder 8, wobei die Isocyanatverbindung mindestens Hexamethylen-1,6-diisocyanat, ein Oligomer von Hexamethylen-1,6-diisocyanat oder ein Homopolymer von Hexamethylen-1,6-diisocyanat enthält.

10. Verfahren nach einem der Ansprüche 7 bis 9, wobei das Polyol mindestens Polyethylenglykol, Polypropylenetherpolyol und/oder 1,4-Butandiol enthält.

11. Verfahren nach einem der Ansprüche 7 bis 10, wobei die Lösung einen Katalysator, bevorzugt Dibutylzinndilaurat, enthält.

12. Verfahren nach einem der Ansprüche 7 bis 11, wobei die Fensterscheibe bei einer Temperatur von 30°C bis 70°C, bevorzugt von 45°C bis 55°C, getrocknet wird.

13. Verfahren nach einem der Ansprüche 7 bis 12, wobei in Verfahrensschritt (c) die Temperatur auf 115°C bis 130°C erhöht wird.

14. Verwendung einer Fensterscheibe mit einer hydrophilen Beschichtung nach einem der Ansprüche 1 - 6 in Transportmitteln für Land, Luft und Wasserverkehr, insbesondere in Elektrofahrzeugen und anderen Kraftfahrzeugen, beispielsweise als Windschutzscheiben, Heckscheiben, Seitenscheiben und/oder Dachfenstern, als Fensterscheiben in Gebäuden, in Spiegeln in Funktions- und/oder Ziereinzelstücken und als Glasscheiben als Einbauteile in Möbeln und Vorrichtungen zur Verringerung der Feuchtigkeitskondensation an der Scheibe.

## Revendications

1. Une vitre avec un revêtement hydrophile, comprenant au moins:
- un substrat (1) et
- une couche hydrophile (2) contenant au moins de 85 % en poids à 92 % en poids de polyuréthane, de 8 % en poids à 11 % en poids de polyvinyle pyrrolidone, et 0,08 % à 0,2 % en poids d'un agent d'écoulement.

2. La vitre selon la revendication 1, où l'agent d'écoulement contient au moins un polydiméthylsiloxane, de préférence un polydiméthylsiloxane modifié par un polyester, de manière particulièrement préférée un polydiméthylsiloxane hydroxy-fonctionnelle, modifié par un polyester.

3. La vitre selon la revendication 1 ou 2, où la polyvinyle pyrrolidone et l'agent d'écoulement sont intégrés dans le polyuréthane.

4. La vitre selon l'une des revendications 1 à 3, où la moyenne en poids du poids moléculaires du polyvinyle pyrrolidone est de 1,1 x 10⁶ g/mol à 1,8 x 10⁶ g/mol.

5. La vitre selon l'une des revendications 1 à 4, où la couche hydrophile (2) a une épaisseur de 0,1 µm à 250 µm, de préférence de 1 µm à 100 µm, de manière particulièrement préférée de 3 µm à 50 µm.

6. La vitre selon l'une des revendications 1 à 5, où la couche hydrophile (2) est collée sur le substrat (1) par un promoteur d'adhérence (3) et le promoteur d'adhérence (3) contient de préférence au moins un silane amino-fonctionnel.

7. Procédé de fabrication d'une vitre avec un revêtement hydrophile (2), où
(a) une solution contenant au moins 19 % en poids à 23 % en poids d'un composé isocyanate et 10 % en poids à 13 % en poids d'un polyol, 3 % en poids à 5 % en poids de polyvinyle pyrrolidone, 0,02 % en poids à 0,05 % en poids d'un agent d'écoulement et un solvant est appliquée sur un substrat (1),
(b) la vitre contenant le substrat (1) et la solution appliquée est séché et
(c) la température est portée à 100 °C à 150 °C.

8. Procédé selon la revendication 7, où avant l'étape (a) du procédé, un promoteur d'adhérence (3) est appliqué sur le substrat (1).

9. Procédé selon la revendication 7 ou 8, où le composé isocyanate contient au moins du hexaméthylène-1,6-diisocyanate, un oligomère de hexaméthylène-1,6-diisocyanate, ou un homopolymère de hexaméthylène-1,6-diisocyanate.

10. Procédé selon l'une des revendications 7 à 9, où le polyol contienne au moins du glycol polyéthylénique, un polyol éther de polypropylène et/ou du 1,4-butanediol.

11. Procédé selon l'une des revendications 7 à 10, où la solution contient un catalyseur, de préférence du dilaurate de dibutylétain.

12. Procédé selon l'une des revendications 7 à 11, où la vitre est séchée à une température de 30 °C à 70 °C, de préférence de 45 °C à 55 °C.

13. Procédé selon l'une des revendications 7 à 12, où au cours de l'étape (c) du procédé la température est augmentée à 115 °C à 130 °C.

14. Utilisation d'une vitre avec un revêtement hydrophile selon l'une des revendications 1 à 6 dans les moyens de transport terrestres, aériens et par voie navigable, en particulier dans les véhicules électriques et d'autres véhicules à moteur, par exemple, comme les pare-brises, les vitres arrières, les vitres latérales, et / ou des fenêtres de toit, comme les fenêtres dans les bâtiments, dans les miroirs en pièces individuels fonctionnelles et / ou décoratives et les vitres telles que les composants intégrés dans les meubles et les appareils pour réduire la condensation d'humidité sur la vitre.
